# FASCICULE DE BREVET EUROPEEN

(11) **EP 2 712 720 B1**
(45) Date de publication et mention de la délivrance du brevet: **14.02.2018**
(21) Numéro de dépôt: 13184745.1
(22) Date de dépôt: 17.09.2013
(51) Int. Cl.: B29C 45/14, B29C 45/00

(54) **Hayon de véhicule automobile comprenant une pièce renforcée, et procédé de fabrication correspondant**
Heckklappe für Kraftfahrzeug umfassend ein verstärktes Bauteil, und entsprechendes Herstellungsverfahren
Tailgate for a motor vehicle including a reinforced part, and corresponding manufacturing method

(30) Priorité: 26.09.2012 FR 1259033
(43) Date de publication de la demande: 02.04.2014
(73) Titulaire: Flex-N-Gate France, 75008 Paris (FR)
(72) Inventeur: Imbert, Didier, 70200 Froideterre (FR); Nozza, Sébastien, 70400 Bussurel (FR)
(74) Mandataire: Lavoix

(56) Documents cités:
- WO-A1-2008/134062
- JP-A- H0 592 442
- JP-A- S58 168 510
- JP-A- 2003 260 724
- US-A1- 2002 074 688

## Description

La présente invention concerne un hayon comportant une pièce renforcée pour véhicule automobile comprenant un élément de renforcement et une enveloppe en matière plastique surmoulée sur l'élément de renforcement, l'enveloppe définissant au moins en partie une surface externe de la pièce renforcée.

L'invention concerne également un procédé de fabrication d'une pièce renforcée pour véhicule automobile.

En particulier, l'invention s'applique aux ouvrants de véhicules automobiles, tels que des hayons.

On connaît, dans l'état de la technique, un hayon de coffre de véhicule automobile comportant une pièce structurelle en matière plastique.

Afin de répondre aux contraintes définies par les constructeurs du véhicule, en termes notamment de déformation de l'ouvrant selon des critères de flexion, torsion, appui latéral, etc., la rigidité structurelle de cette pièce nécessite d'être renforcée. La solution couramment adoptée consiste à adjoindre à la pièce structurelle en plastique des renforts métalliques, afin de rigidifier l'ensemble.

Toutefois, la présence de ces renforts métalliques augmente sensiblement la masse ainsi que la complexité d'assemblage d'un tel ouvrant.

Les documents WO 2008/134062 A1 et JP S58 168510 A décrivent une pièce renforcée comprenant de tels éléments de renforcement.

Les documents JP H05 92442 A, US 2002/074688 A1 et JP 2003 260724 A illustrent l'arrière-plan technologique.

On connaît de DE-A-10 2005 040404 un procédé de fabrication d'une pièce renforcée pour véhicule automobile. Dans ce procédé, un insert est placé au centre d'un moule, en étant maintenu à l'écart des parois du moule au moyen de doigts, et un matériau plastique est ensuite injecté dans le moule, les doigts étant progressivement retirés à mesure de l'avancée du matériau plastique dans le moule.

Ce procédé ne donne cependant pas entière satisfaction. En effet, l'insert n'est plus maintenu au cours de la phase d'injection et risque donc de se déplacer, notamment de venir affleurer la surface extérieure de la pièce renforcée, ce qui dégrade l'aspect esthétique de la pièce et peut entraîner une rigidification inadéquate de la pièce. En outre, ce procédé nécessite l'emploi d'un moule coûteux et complexe.

Le document WO2008/134062 décrit un hayon de véhicule automobile selon le préambule de la revendication 1.

Un objectif de l'invention est d'obtenir un hayon renforcé pour véhicule automobile présentant un aspect extérieur homogène. Un autre objectif est que cette pièce soit simple et peu coûteuse à fabriquer.

A cet effet, l'invention a pour objet un hayon de véhicule automobile selon la revendication 1.

Selon des modes de réalisation préférés de l'invention, le hayon présente également l'une ou plusieurs des caractéristiques suivantes, prise(s) isolément ou suivant toute(s) combinaison(s) techniquement possible(s) :
- la ou chaque protubérance présente une base large de liaison au corps, et une extrémité étroite d'affleurement de la surface externe ;
- le corps est en métal et la ou chaque protubérance est surmoulée sur le corps ;
- le corps est invisible depuis une partie visible de la surface externe.
- le corps présente une première grande face et une deuxième grande face opposée à la première grande face, au moins une première protubérance desdites protubérances faisant saillie depuis la première grande face vers la surface externe, et au moins une deuxième protubérance desdites protubérances faisant saillie depuis la deuxième grande face vers la surface externe.
- le corps présente une première grande face et une deuxième grande face opposée à la première grande face, la ou chaque protubérance faisant saillie depuis la première grande face, la deuxième grande face définissant une partie de la surface externe de la pièce renforcée.

Enfin, l'invention a pour objet un procédé de fabrication d'un hayon de véhicule automobile selon la revendication 8. Selon des modes de réalisation préférés de l'invention, le procédé de fabrication présente également l'une ou plusieurs des caractéristiques suivantes, prise(s) isolément ou suivant toute(s) combinaison(s) techniquement possible(s) :
- lors de l'étape d'insertion, au moins une première desdites protubérances est interposée entre le corps et le poinçon, et au moins une deuxième desdites protubérances est interposée entre le corps et la matrice, de sorte que le corps n'est pas en contact avec la matrice, ni avec le poinçon.
- le corps présente une première grande face et une deuxième grande face opposée à la première grande face, la ou chaque protubérance faisant saillie depuis la première grande face, la deuxième grande face étant, lors de l'étape d'insertion, en appui contre la matrice, respectivement contre le poinçon.

D'autres caractéristiques et avantages de l'invention apparaîtront à la lecture de la description qui va suivre, donnée uniquement à titre d'exemple et faite en se référant aux dessins annexés, dans lesquels :
- la Figure 1 est une vue de derrière d'un hayon de coffre arrière d'un véhicule automobile,
- la Figure 2 est une vue en coupe d'une traverse du hayon de la Figure 1, selon une variante,
- la Figure 3 est une vue de dessus d'un élément de renforcement de la traverse, selon la variante de la figure 2,
- la Figure 4 est une vue en coupe de la traverse du hayon de la Figure 1, selon une variante de l'invention,
- la Figure 5 est une vue de dessus de l'élément de renforcement de la traverse, selon la variante,
- la Figure 6 est une vue en coupe de la traverse du hayon de la Figure 1, selon une variante de l'invention,
- la Figure 7 est une vue en coupe d'un moule de fabrication de la traverse du hayon de la Figure 1, lors de la fabrication de cette traverse, et
- la Figure 8 est une vue en coupe d'un moule de fabrication de la pièce renforcée de la Figure 6, lors de la fabrication de cette pièce.

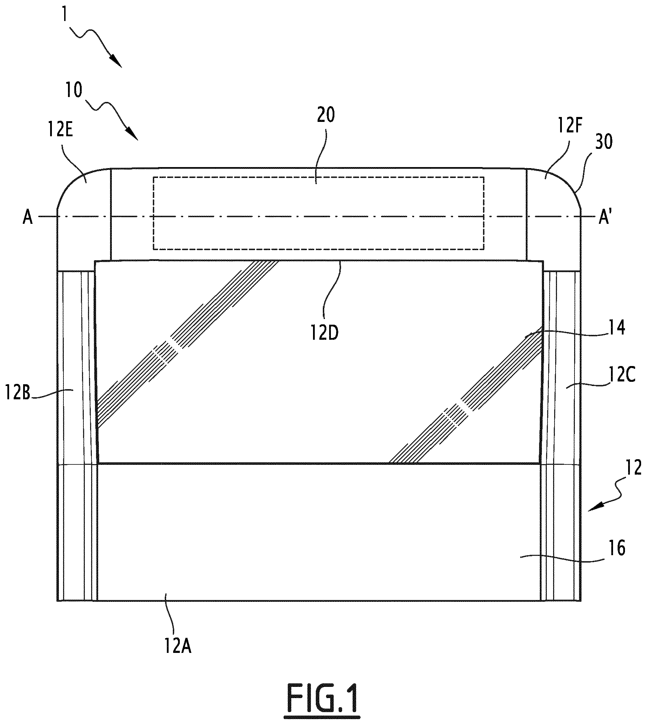

Sur la figure 1, on considère un véhicule automobile 1 comportant un hayon 10 de coffre arrière.

Le hayon 10 est monté articulé sur un élément de la caisse du véhicule automobile 1 pour pouvoir obturer l'ouverture du coffre arrière délimitée par la caisse du véhicule.

Comme connu en soi, un tel hayon 10 constitue un ouvrant du véhicule, propre à pivoter autour d'un axe A-A' horizontal et transversal entre une position d'ouverture (non représentée) dans laquelle l'accès au coffre est possible, et une position de fermeture, dans laquelle l'accès au coffre depuis l'extérieur du véhicule 1 est impossible.

Un tel hayon 10 comporte une pièce structurelle 12 définissant par exemple dans sa zone supérieure une ouverture 14 propre à recevoir une vitre arrière.

L'ouverture 14 est délimitée vers le bas par un panneau inférieur de coffre 12A, sur le côté par deux montants 12B, 12C et vers le haut par une traverse 12D. Des cornières supérieures 12E, 12F assurent la liaison des montants 12B, 12C avec la traverse 12D.

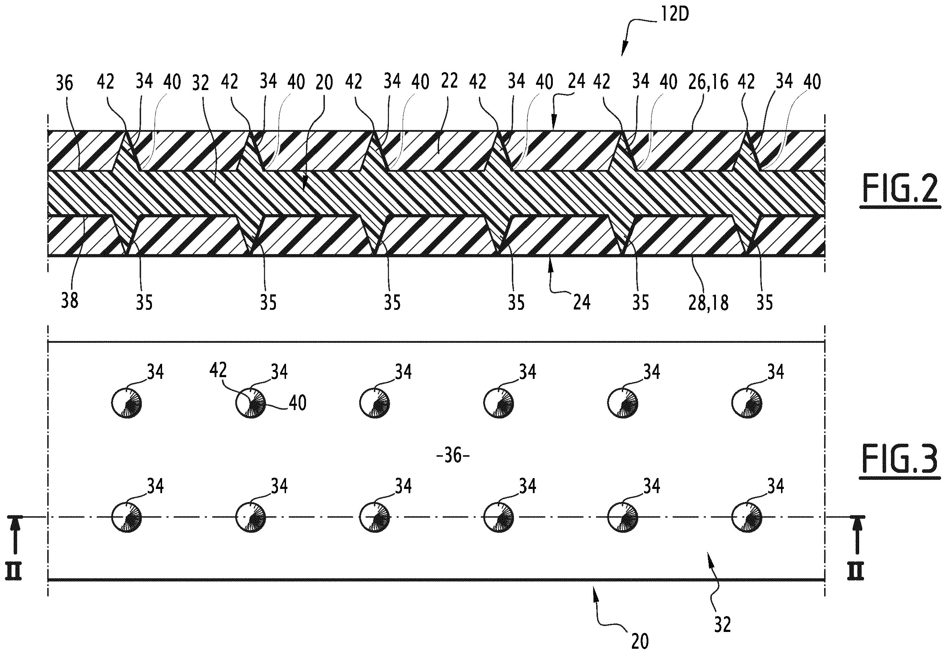

La pièce structurelle 12 est venue de matière et est par exemple réalisée en plastique. Elle présente une surface extérieure 16 et une surface intérieure 18 (Figure 2).

La surface extérieure 16 définit une partie de la surface extérieure d'aspect du véhicule 1.

La surface intérieure 18 est la partie de la pièce structurelle 12 orientée vers l'intérieur du véhicule 1. Elle est le plus souvent visible depuis l'intérieur du véhicule 1. En variante (non représentée), elle est couverte par une doublure.

En référence aux Figures 2 à 6, la traverse 12D comporte un élément de renforcement 20 et une enveloppe 22 en matière plastique surmoulée sur l'élément de renforcement 20.

L'enveloppe 22 définit au moins une partie d'une surface externe 24 de la traverse 12D. Cette surface externe 24 comprend une première grande face 26 de la traverse 12D, une deuxième grande face 28 de la traverse 12D, opposée à la première grande face 26, et un bord périphérique 30 de la traverse 12D.

La première grande face 26 constitue une partie de la surface extérieure 16 de la pièce structurelle 12. La deuxième grande face 28 constitue une partie de la surface intérieure 18 de la pièce structurelle 12.

La première grande face 26 constitue ainsi une partie visible de la surface externe 24. En outre, la deuxième grande face 28 constitue également, selon certaines variantes dans lesquelles la surface interne ne comprend pas de doublure, une partie visible de la surface externe 24.

L'élément de renforcement 20 comprend un corps 32 et une pluralité de protubérances 34, 35 faisant saillie depuis le corps 32 vers une partie visible de la surface externe 24.

Le corps 32 est invisible depuis les parties visibles de la surface externe 24 car il est noyé dans l'enveloppe 22 à distance de ces parties visibles.

Le corps 32 présente une première grande face 36, et une deuxième grande face 38, opposée à la première grande face 36.

Chaque grande face 36, 38 est sensiblement plane, et les deux grandes faces 36, 38 s'étendent sensiblement parallèlement l'une à l'autre.

La première grande face 36 est orientée vers la première grande face 26 de la traverse 12D, et la deuxième grande face 38 est orientée vers la deuxième grande face 28 de la traverse 12D.

Chaque protubérance 34, 35 affleure une partie visible de la surface externe 24.

Chaque protubérance 34, 35 présente une base large 40 de liaison au corps 32, et une extrémité étroite 42 d'affleurement de la surface externe 24. En particulier, l'extrémité étroite est par exemple une pointe dont seul le sommet affleure la surface externe. Ainsi, chaque protubérance 34, 35 est très peu visible depuis la surface externe 24, tout en étant solidement liée au corps 32. Chaque protubérance 34, 35 a en particulier une forme conique, comme représenté, ou tronconique.

Chaque protubérance 34, 35 est en matière plastique.

Sur les Figures 2 à 5, le corps 32 est intégralement noyé dans l'enveloppe 22, de façon à ne pas être visible. En d'autres termes, l'enveloppe 22 s'étend tout autour du corps 32. L'enveloppe 22 définit alors l'intégralité de la surface externe 24.

Ces variantes sont particulièrement indiquées dans les cas où les première et deuxième grandes faces 26, 28 de la traverse 12D constituent des parties visibles de la surface externe 24.

Les protubérances 34, 35 sont alors formées de premières protubérances 34 et de deuxièmes protubérances 35.

Chaque première protubérance 34 fait saillie depuis la première grande face 36 du corps 32 vers la première grande face 26 de la traverse 12D, et affleure ladite première grande face 26.

Les premières protubérances 34 ont sensiblement toutes la même hauteur, c'est-à-dire que la distance de la base 40 à la pointe 42 de chaque protubérance 34 est sensiblement égale pour toutes les premières protubérances 34.

Chaque deuxième protubérance 35 fait saillie depuis la deuxième grande face 38 du corps 32 vers la deuxième grande 28 de la traverse 12D, et affleure ladite deuxième grande face 28.

Les deuxièmes protubérances 35 ont sensiblement toutes la même hauteur, c'est-à-dire que la distance de la base 40 à la pointe 42 de chaque protubérance 35 est sensiblement égale pour toutes les deuxièmes protubérances 35.

Les premières et deuxièmes protubérances 34, 35 sont de préférence, comme représenté, en nombres égaux. En particulier, chaque première protubérance 34 est disposée au droit d'une deuxième protubérance 35, relativement au corps 32, l'élément de renforcement 20 étant alors sensiblement symétrique par rapport à un plan passant par le corps 32 et sensiblement parallèle aux grandes faces 36, 38.

Les première et deuxième protubérances 34, 35 ont sensiblement la même hauteur les unes que les autres. Ainsi, le corps 32 est à sensiblement équidistance des première et deuxième grandes faces 26, 28 de la traverse 12D.

Sur les Figures 2 et 3, le corps 32 est également en matière plastique, optionnellement renforcée par des fibres de verre, de carbone ou autre, et chaque protubérance 34, 35 est venue de matière avec le corps 32.

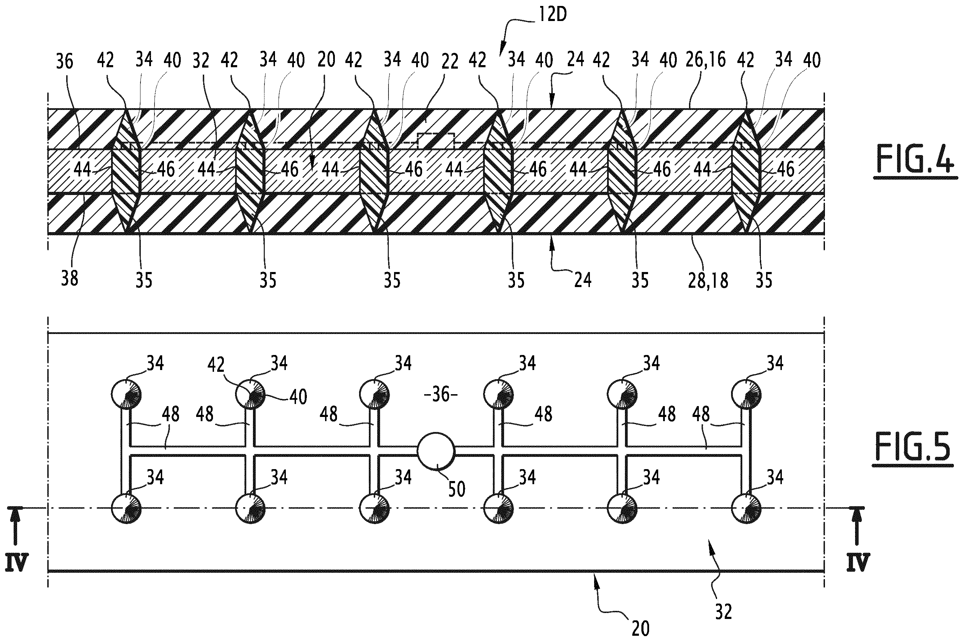

Dans une première variante de l'invention représentée sur les Figures 4 et 5, le corps 32 est en métal. Chaque protubérance 34, 35 est alors en matière plastique, optionnellement renforcée par des fibres de verre, de carbone ou autre, et est surmoulée sur le corps 32.

En particulier, le corps 32 présente une pluralité d'orifices traversants 44, débouchant chacun dans la première grande face 36 et dans la deuxième grande face 38.

Pour chaque orifice 44, une protubérance 34, 35 est disposée à chaque extrémité débouchante dudit orifice 44. Un tronçon 46 en matière plastique, comblant l'orifice 44, joint les deux protubérances 34, 35 l'une à l'autre. Les protubérances 34, 35 sont ainsi venues de matière deux à deux.

De plus, comme visible sur la Figure 5, un réseau de nervures 48 s'étend le long de la première grande face 36, joignant les protubérances 34 les unes aux autres. Ces nervures 48 sont en matière plastique. Elles sont venues de matière les unes avec les autres, et avec les protubérances 34. Les protubérances 34, 35 sont ainsi toutes venues de matière les unes avec les autres.

La première grande face 36 porte également un plot 50. Ce plot 50 est moins haut que chaque protubérance 34, c'est-à-dire que la plus grande distance d'un point du plot 50 à la première grande face 36 est inférieure à la distance de la base 40 à l'extrémité 42 de chaque protubérance 34.

Le plot 50 est en matière plastique, et est venu de matière avec les nervures 48. Il est sensiblement au centre de la première grande face 36. Il correspond à la localisation d'une tête d'injection pour le surmoulage des protubérances 34, 35 sur le corps 32.

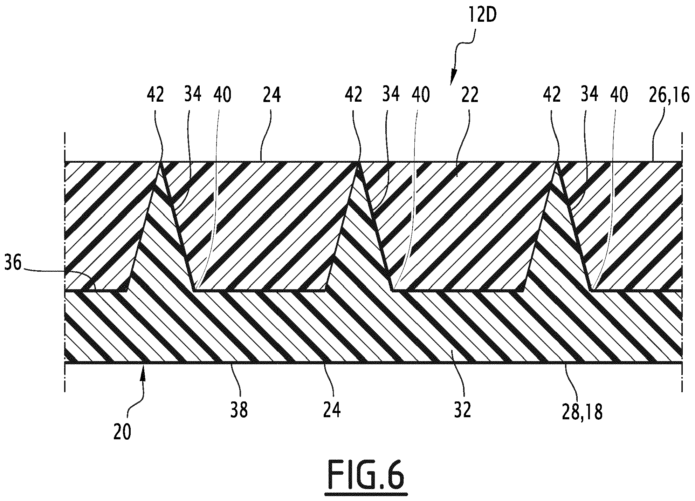

Dans une deuxième variante de l'invention représentée sur la Figure 6, la deuxième grande face 38 du corps 32 définit une partie de la surface externe 24. Elle définit en particulier la deuxième grande face 28 de la traverse 12D

Seule la première grande face 26 forme alors une partie visible de la surface externe 24. La deuxième grande face 28 est dissimulée, par exemple par une doublure du hayon 10.

Les protubérances 34 font chacune saillie depuis la première grande face 36 du corps 32 vers la première grande face 26 de la traverse 12D, et affleurent ladite première grande face 26.

On notera que les protubérances 34 sont représentées, dans la deuxième variante, comme étant venues de matière avec le corps 32 mais que, en alternative, le corps 32 les protubérances 34 sont formées dans des matériaux différents, les protubérances 34 étant surmoulées sur le corps 32, de même que dans la première variante.

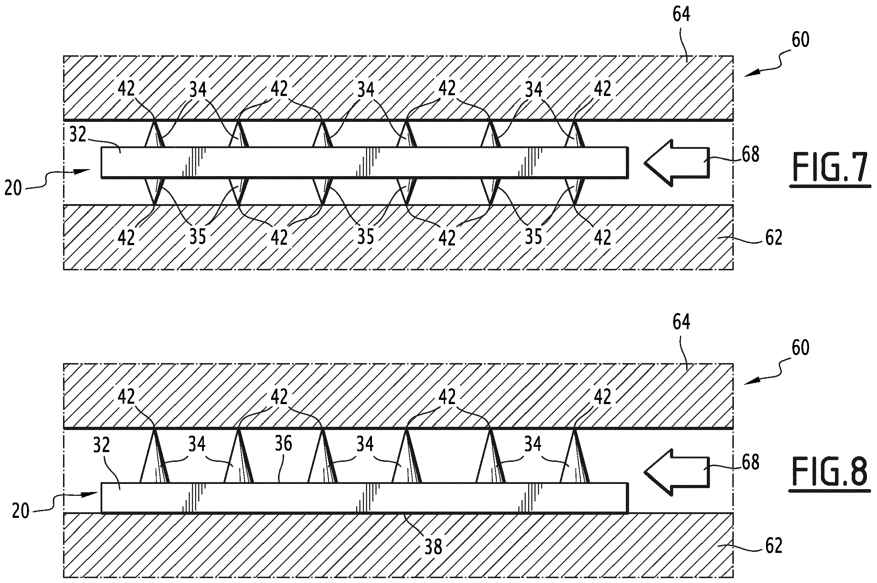

Un procédé de fabrication de la traverse 12D va maintenant être décrit, en référence aux Figures 7 et 8.

L'élément de renforcement 20 est tout d'abord fourni avec ses protubérances 34, 35. Il est inséré dans un moule 60, ledit moule 60 comprenant une matrice 62 et un poinçon 64.

L'élément de renforcement 20 est en particulier posé sur la matrice 62. Sur la figure 7, les extrémités 42 des deuxièmes protubérances 35 sont en contact avec la matrice 62, de sorte que les deuxièmes protubérances 35 maintiennent le corps 32 à distance de la matrice 62. Sur la figure 8, la deuxième grande face 38 du corps 32 est contact avec la matrice 62.

Puis le poinçon 64 est déplacé jusqu'à venir en butée contre les extrémités 42 des premières protubérances 34. L'élément de renforcement 20 est alors pris en étau entre la matrice 62 et le poinçon 64, et les premières protubérances 34 maintiennent le corps 32 à distance du poinçon 64.

La matrice 62 et le poinçon 64 délimitent ainsi une chambre 66 dans laquelle est disposé l'élément de renforcement 20.

Puis une matière plastique 68 est injectée dans la chambre 66. L'élément de renforcement 20 étant pris en étau entre la matrice 62 et le poinçon, cela évite qu'il ne se déplace sous l'effet de la pression exercée par la matière plastique 68.

La matière plastique 68 comble alors l'intégralité de la chambre 66, du poinçon 64 jusqu'à la matrice 62.

Sur la figure 7, le corps 32 étant à distance de la matrice 62 et du poinçon 64, la matière plastique 68 enrobe l'intégralité du corps 32. Sur la figure 8, seule la première grande face 36 du corps 32 est enrobée par la matière plastique.

Les protubérances 34, 35 sont également enrobées, à l'exception de leurs extrémités 42 en contact le poinçon 64, respectivement avec la matrice 62.

La matière plastique 68 injectée forme en se refroidissant l'enveloppe 22.

Ainsi, grâce à l'invention décrite ci-dessus, on obtient une traverse de hayon renforcée, dont les parties visibles présentent un aspect homogène. En outre, cette traverse est simple et peu coûteuse à fabriquer.

On notera que, quand bien même, dans l'exemple donné ci-dessus, seule la traverse 12D du hayon 10 forme une pièce renforcée selon l'invention, l'invention n'est pas limitée à ce seul mode de réalisation. En variante ou en option, le hayon 10 comprend d'autres pièces renforcées selon l'invention, par exemple dans le panneau inférieur 12A, de préférence au niveau de la serrure du hayon ou au niveau des coins inférieurs de ce dernier, ou dans les montants 12B, 12C, ou dans les cornières supérieures 12E, 12F

## Revendications

1. Hayon (10) de véhicule automobile comportant une pièce renforcée (12D) pour véhicule automobile, ladite pièce renforcée (12D) comprenant un élément de renforcement (20) et une enveloppe (22) en matière plastique surmoulée sur l'élément de renforcement (20), l'enveloppe (22) définissant au moins en partie une surface externe (24) de la pièce renforcée (12D), l'élément de renforcement (20) comportant un corps (32) et une pluralité de protubérances (34, 35) faisant saillies depuis le corps (32) vers la surface externe (24), chaque protubérance (34, 35) affleurant ladite surface externe (24) **caractérisé en ce que**
le corps (32) est en métal, présente une première grande face (36) et une deuxième grande face (38) opposée à la première grande face (36), et présente une pluralité d'orifices traversants (44), débouchant chacun dans la première grande face (36) et dans la deuxième grande face (38), **en ce que**
chaque protubérance (34, 35) est en matière plastique surmoulée sur le corps (32), est disposée à une des extrémités débouchantes d'un des orifices traversants (44) du corps (32) et comporte un tronçon (46) comblant ledit un des orifices traversants (44) du corps (32), et **en ce que**
un réseau de nervures (48), venues de matière avec les protubérances (34, 35), joint les protubérances (34, 35) les unes aux autres et s'étend le long de la première grande face (36), et un plot (50) qui, venu de matière avec les nervures (48), est sensiblement au centre de la première grande face (36) et est moins haut que chaque protubérance (34, 35).

2. Hayon (10) selon la revendication 1, dans lequel chaque protubérance (34, 35) présente une base large (40) de liaison au corps (32), et une extrémité étroite (42) d'affleurement de la surface externe (24).

3. Hayon (10) selon la revendication 1 ou 2, dans lequel chaque protubérance (34, 35) est conique ou tronconique.

4. Hayon (10) selon l'une quelconque des revendications précédentes, dans lequel le corps (32) est invisible depuis une partie visible (26, 28) de la surface externe (24).

5. Hayon (10) selon l'une quelconque des revendications précédentes, dans lequel, au moins une première protubérance (34) desdites protubérances (34, 35) fait saillie depuis la première grande face (36) vers la surface externe (24), et au moins une deuxième protubérance (35) desdites protubérances (34, 35) faisant saillie depuis la deuxième grande face (38) vers la surface externe (24).

6. Hayon (10) selon l'une quelconque des revendications 1 à 4, dans lequel chaque protubérance (34) faisant saillie depuis la première grande face (36), la deuxième grande face (38) définissant une partie de la surface externe (24) de la pièce renforcée (12D).

7. Hayon (10 selon l'une quelconque des revendications précédentes, dans lequel chaque protubérance (34, 35) est renforcée par des fibres de verre ou de carbone

8. Procédé de fabrication d'un hayon (10) de véhicule automobile, comprenant une étape de fabrication d'une pièce renforcée (12D), en particulier une traverse, du hayon (10) **caractérisé en ce que** l'étape de fabrication comprend les sous-étapes suivantes :
- fourniture d'un élément de renforcement (20), l'élément de renforcement (20) comprenant un corps (32) et une pluralité de protubérance (34, 35) faisant saillie depuis le corps (32), le corps (32) étant en métal, présentant une première grande face (36) et une deuxième grande face (38) opposée à la première grande face (36), et présentant une pluralité d'orifices traversants (44), débouchant chacun dans la première grande face (36) et dans la deuxième grande face (38), chaque protubérance (34, 35) étant en matière plastique surmoulée sur le corps (32), étant disposée à une des extrémités débouchantes d'un des orifices traversants (44) du corps (32) et comportant un tronçon (46) comblant ledit un des orifices traversants (44) du corps (32), et un réseau de nervures (48), venues de matière, avec les protubérances (34, 35), joignant les protubérances (34, 35) les unes aux autres et s'étendant le long de la première grande face (36), et un plot (50) qui, venu de matière avec les nervures (48), est sensiblement au centre de la première grande face (36) et est moins haut que chaque protubérance (34, 35).
- insertion de l'élément de renforcement (20) dans un moule (60) comprenant une matrice (62) et un poinçon (64), l'élément de renforcement (20) étant pris en étau entre la matrice (62) et le poinçon (64), le corps (32) étant maintenu à distance d'au moins un des matrice (62) et poinçon (64) par la ou chaque protubérance (34, 35), et
- injection d'une matière plastique (68) dans le moule (60).

9. Procédé de fabrication selon la revendication 8, dans lequel, lors de l'étape d'insertion, au moins une première (34) desdites protubérances (34, 35) est interposée entre le corps (32) et le poinçon (64), et au moins une deuxième (35) desdites protubérances (34, 35) est interposée entre le corps (32) et la matrice (62), de sorte que le corps (32) n'est pas en contact avec la matrice (62), ni avec le poinçon (64).

10. Procédé de fabrication selon la revendication 8, dans lequel, lors d'une étape d'insertion chaque protubérance (34) est interposée entre le corps (32) et le poinçon (64), la deuxième grande face (38) du corps (32) étant en appui contre la matrice (62).

## Patentansprüche

1. Heckklappe (10) eines Kfz, umfassend ein verstärktes Kfz-Bauteil (12D), wobei das verstärkte Bauteil (12D) ein Verstärkungselement (20) und eine auf dem Verstärkungselement (20) aufgeformte Kunststoffhülle (22) umfasst, wobei die Hülle (22) mindestens teilweise eine Außenfläche (24) des Bauteils (12D) definiert, wobei das Verstärkungselement (20) einen Körper (32) und eine Mehrzahl Vorsprünge (34, 35) umfasst, die vom Körper (32) hin zur Außenfläche (24) hervorstehen, wobei jeder Vorsprung (34, 35) an der Außenfläche (24) anliegt, **dadurch gekennzeichnet, dass**
der Körper (32) aus Metall besteht, eine erste große Oberfläche (36) und eine der ersten großen Oberfläche (36) gegenüberliegende zweite große Oberfläche (38) sowie eine Mehrzahl Durchgangsöffnungen (44), die in die erste (36) und zweite große Oberfläche (38) münden, aufweist, dass
jeder Vorsprung (34, 35) aus Kunststoff besteht und auf dem Körper (32) aufgeformt ist, an einem der öffneten Enden der Durchgangsöffnungen (44) des Körpers (32) angeordnet ist und einen Abschnitt (46) umfasst, der die jeweilige Durchgangsöffnung (44) des Körpers (32) füllt, und dass
ein mit den Vorsprüngen (34, 35) einteilig ausgebildetes Rippennetz (48) die Vorsprünge (34, 35) verbindet und sich entlang der ersten großen Oberfläche (36) erstreckt, und ein mit den Rippen (48) einteilig ausgebildeter Zapfen (50) im Wesentlichen in der Mitte der ersten großen Oberfläche (36) angeordnet ist und der Höhe nach kleiner ist als jeder Vorsprung (34, 35).

2. Heckklappe (10) nach Anspruch 1 wobei jeder Vorsprung (34, 35) eine mit dem Körper (32) verbundene breite Basis (40) und ein schmales Ende (42) zum Aufschluss auf der Außenfläche (24) aufweist.

3. Heckklappe (10) nach Anspruch 1 oder 2, wobei jeder Vorsprung (34, 35) kegel- oder kegelstumpfförmig ist.

4. Heckklappe (10) nach einem der vorstehenden Ansprüche, wobei der Körper (32) von einem sichtbaren Teil (26, 28) der Außenfläche (24) aus unsichtbar ist.

5. Heckklappe (10) nach einem der vorstehenden Ansprüche, wobei mindestens ein erster Vorsprung (34) der Vorsprünge (34, 35) von der ersten großen Oberfläche (36) hin zur Außenfläche (24) hervorsteht und mindestens ein zweiter Vorsprung (35) der Vorsprünge (34, 35) von der zweiten großen Oberfläche (38) hin zur Außenfläche (24) hervorsteht.

6. Heckklappe (10) nach einem der Ansprüche 1 - 4, wobei jeder Vorsprung (34) von der ersten großen Oberfläche (36) hervorsteht, wobei die zweite große Oberfläche (38) einen Teil der Außenfläche (24) des verstärkten Bauteils (12D) definiert.

7. Heckklappe (10) nach einem der vorstehenden Ansprüche, wobei jeder Vorsprung (34, 35) durch Glas- oder Kohlenstofffasern verstärkt ist.

8. Verfahren zur Herstellung einer Heckklappe (10) eines Kfz, umfassend einen Schritt zum Herstellen eines verstärkten Bauteils (12D), insbesondere einer Traverse, der Heckklappe (10), **dadurch gekennzeichnet, dass** der Herstellungsschritt die nachfolgenden Teilschritte umfasst:
- Vorsehen eines Verstärkungselements (20), wobei das Verstärkungselement (20) einen Körper (32) und eine Mehrzahl vom Körper (32) hervorstehender Vorsprünge (34, 35) umfasst, der Körper (32) aus Metall besteht, eine erste große Oberfläche (36) und eine der ersten großen Oberfläche (36) gegenüberliegende zweite große Oberfläche (38) sowie eine Mehrzahl Durchgangsöffnungen (44), die in die erste (36) und zweite große Oberfläche (38) münden, aufweist, jeder Vorsprung (34, 35) aus Kunststoff besteht und auf dem Körper (32) aufgeformt ist, an einem der öffneten Enden der Durchgangsöffnungen (44) des Körpers (32) angeordnet ist und einen Abschnitt (46) umfasst, der die jeweilige Durchgangsöffnung (44) des Körpers (32) füllt, ein mit den Vorsprüngen (34, 35) einteilig ausgebildetes Rippennetz (48) die Vorsprünge (34, 35) verbindet und sich entlang der ersten großen Oberfläche (36) erstreckt, und ein mit den Rippen (48) einteilig ausgebildeter Zapfen (50) im Wesentlichen in der Mitte der ersten großen Oberfläche (36) angeordnet ist und der Höhe nach kleiner ist als jeder Vorsprung (34, 35);
- Einfügen des Verstärkungselements (20) in eine Form (60), umfassend eine Matrix (62) und eine Stanze (64), wobei das Verstärkungselement (20) zwischen der Matrix (62) und der Stanze (64) geklemmt wird, wobei der Körper (32) durch den bzw. jeden Vorsprung (34, 35) von der Matrix (62) und/oder der Stanze (64) beabstandet wird, und
- Einspritzen eines Kunststoffmaterials (68) in die Form (60).

9. Verfahren nach Anspruch 8, wobei beim Einführen mindestens ein erster (34) der Vorsprünge (34, 35) zwischen dem Körper (32) und der Stanze (64) angeordnet ist und mindestens ein zweiter (35) der Vorsprünge (34, 35) zwischen dem Körper (32) und der Matrix (62) angeordnet ist, so dass der Körper (32) weder mit der Matrix (62) noch mit der Stanze (64) in Berührung kommt.

10. Verfahren nach Anspruch 8, wobei beim Einfügen jeder Vorsprung (34) zwischen dem Körper (32) und der Stanze (64) angeordnet ist, wobei die zweite große Oberfläche (38) des Körpers (32) auf der Matrix (62) aufliegt.

## Claims

1. A motor vehicle tailgate (10) including a reinforced part (12D) for a motor vehicle, said reinforced part (12D) comprising a reinforcing element (20) and an enclosure (22) made from plastic overmolded on the reinforcing element (20), the enclosure (22) defining at least part of an outer surface (24) of the reinforced part (12D), the reinforcing element (20) including a body (32) and a plurality of protuberances (34, 35) protruding from the body (32) toward the outer surface (24), each protuberance (34, 35) being flush with said outer surface (24), **characterized in that**
the body (32) is made from metal, has a first large face (36) and a second large face (38) opposite the first large face (36), and has a plurality of through orifices (44), each emerging in the first large face (36) and in the second large face (38), **in that**
each protuberance (34, 35) is made from plastic overmolded on the body (32), is positioned at one of the emerging ends of one of the through orifices (44) of the body (32) and includes a segment (46) filling in said one of the through orifices (44) of the body (32), and **in that**
an array of ribs (48), integral with the protuberances (34, 35), joins the protuberances (34, 35) to one another and extends along the first large face (36), and a stud (50) which, integral with the ribs (48), is substantially at the center of the first large face (36) and is not as high as each protuberance (34, 35).

2. The tailgate (10) according to claim 1, wherein each protuberance (34, 35) has a large base (40) for connecting to the body (32), and a narrow end (42) flush with the outer surface (24).

3. The tailgate (10) according to claim 1 or 2, wherein each protuberance (34, 35) is conical or frustoconical.

4. The tailgate (10) according to any one of the preceding claims, wherein the body (32) is invisible from a visible part (26, 28) of the outer surface (24).

5. The tailgate (10) according to any one of the preceding claims, wherein at least one first protuberance (34) of said protuberances (34, 35) protrudes from the first large face (36) toward the outer surface (24), and at least one second protuberance (35) of said protuberances (34, 35) protrudes from the second large face (38) toward the outer surface (24).

6. The tailgate (10) according to any one of claims 1 to 4, wherein each protuberance (34) protrudes from the first large face (36), the second large face (38) defining a part of the outer surface (24) of the reinforced part (12D).

7. The tailgate (10) according to any one of the preceding claims, wherein each protuberance (34, 35) is reinforced by glass or carbon fibers.

8. A method for manufacturing a motor vehicle tailgate (10), comprising a step for manufacturing a reinforced part (12D), in particular a crosspiece, of the tailgate (10), **characterized in that** the manufacturing step comprises the following substeps:
- providing a reinforcing element (20), the reinforcing element (20) comprising a body (32) and a plurality of protuberances (34, 35) protruding from the body (32), the body (32) being made from metal, having a first large face (36) and a second large face (38) opposite the first large face (36), and having a plurality of through orifices (44), each emerging in the first large face (36) and the second large face (38), each protuberance (34, 35) being made from plastic overmolded on the body (32), being positioned at one of the emerging ends of one of the through orifices (44) of the body (32) and including a segment (46) filling in said one of the through orifices (44) of the body (32), and an array of ribs (48), integral with the protuberances (34, 35), joining the protuberances (34, 35) to one another and extending along the first large face (36), and a stud (50) which, integral with the ribs (48), is substantially at the center of the first large face (36) and is not as high as each protuberance (34, 35),
- inserting the reinforcing element (20) into a mold (60) comprising a die (62) and a punch (64), the reinforcing element (20) being held in a vise between the die (62) and the punch (64), the body (32) being kept separate from at least one of the die (62) and punch (64) by each protuberance (34, 35), and
- injecting a plastic (68) into the mold (60).

9. The manufacturing method according to the preceding claim, wherein, during the insertion step, at least a first (34) of said protuberances (34, 35) is inserted between the body (32) and the punch (64), and at least a second (35) of said protuberances (34, 35) is inserted between the body (32) and the die (62), such that the body (32) is not in contact with the die (62) or with the punch (64).

10. The manufacturing method according to claim 8, wherein, during the insertion step, each protuberance (34) is inserted between the body (32) and the punch (64), the second large face (38) of the body (32) bearing against the die (62).
